# DEMANDE DE BREVET EUROPEEN

(11) **EP 1 953 039 A2**
(43) Date de publication de la demande: **06.08.2008**
(21) Numéro de dépôt: 08150530.7
(22) Date de dépôt: 23.01.2008
(51) Int. Cl.: B60Q 1/08, F21V 14/08

(54) **Dispositif d'éclairage multifonction pour véhicule automobile**

(30) Priorité: 30.01.2007 FR 0700637
(71) Demandeur: VALEO VISION, 93000 Bobigny (FR)
(72) Inventeur: Blandin, Jonathan, 93320 Les Pavillons sous Bois (FR); Bourdin, David, 93190 Livry Gargan (FR); Goncalves, Manuel, 75020 Paris (FR); Gros, Sébastien, 94300 Vincennes (FR)

(57) **Abrégé**

L'invention concerne un dispositif d'éclairage multifonction pour véhicule automobile, caractérisé en ce qu'il comporte un premier module optique (12) qui produit un premier faisceau lumineux (Fg1) à coupure et un deuxième faisceau lumineux à coupure (Fg2), et un second module optique (32) qui produit un troisième faisceau lumineux (Fd1) sans coupure, et un quatrième faisceau lumineux à coupure (Fd2), le dispositif étant apte à produire une pluralité de faisceaux lumineux globaux (F1,F2,F3,F4) par superposition de faisceaux lumineux produit par le premier et le second module optique (12,32), chaque faisceau global remplissant une fonction déterminée.

## Description

L'invention concerne un dispositif multifonction pour véhicule automobile.

Le domaine de l'invention est, de façon générale, celui des dispositifs d'éclairage multifonction pour véhicule automobile, comportant deux modules optiques d'éclairage qui sont chacun aptes à produire au moins un faisceau lumineux d'avant en arrière selon l'axe principal longitudinal du véhicule.

On connaît :
- des dispositifs qui produisent des faisceaux lumineux remplissant la fonction de feu de position, d'intensité et de portée faible ;
- des dispositifs qui produisent des faisceaux lumineux remplissant la fonction de feu de croisement, ou code, à coupure et d'intensité plus forte que pour la fonction de feu de position et de portée avoisinant 70 mètres. Ce type de faisceau lumineux est utilisé essentiellement la nuit et il permet de ne pas éblouir le conducteur d'un véhicule croisé ;
- des dispositifs qui produisent des faisceaux lumineux remplissant la fonction de feu de route, ou feu de route longue portée, dont la portée avoisine 200 mètres, ce type de faisceaux doit être éteint à la croisée d'un autre véhicule afin de ne pas éblouir son conducteur ; et
- des dispositifs qui produisent des faisceaux lumineux remplissant la fonction de feu anti-brouillard.

Par ailleurs, on connaît un type de dispositif perfectionné qui comporte deux modules optiques bifonction.

Un module optique bifonction comporte un module optique qui est apte à émettre deux type de faisceaux lumineux dont chacun remplit une fonction, par exemple la fonction de code et la fonction de feu de route.

A cet effet, le module optique bifonction comporte un cache constitué par exemple d'une plaque métallique commandée qui est montée mobile entre une première position dans laquelle le cache n'occulte pas la lumière produite par la source lumineuse du module optique, la portée du module optique correspondant alors à celle des faisceaux lumineux remplissant la fonction de feu de route, et une deuxième position de coupure dans laquelle le cache occulte une partie de la lumière produite par la source lumineuse du module optique, la portée du module optique étant ainsi limitée à celle des faisceaux lumineux à coupure remplissant la fonction de code.

Cet exemple de réalisation est notamment mis en oeuvre dans des dispositifs d'éclairage comportant des modules optiques du type elliptique.

On entend par module optique elliptique un module optique comportant :
- une source lumineuse qui est agencée dans un premier foyer,
- un réflecteur, notamment de type ellipsoïdal, capable de concentrer la lumière issue du premier foyer vers un second foyer de concentration situé en avant de la source lumineuse, et
- une lentille placée en avant du second foyer et centrée sur l'axe optique du module optique, permettant de réorienter les rayons de la source lumineuse vers l'axe optique, afin de produire un faisceau d'éclairage.

L'axe optique est l'axe qui passe globalement par le premier foyer du réflecteur, ici par la source lumineuse, et globalement par le second foyer du module optique.

On connaît un autre type de module optique bifonction qui comporte une source lumineuse et un réflecteur montés mobile l'un par rapport à l'autre entre deux positions (comme décrit dans EP 889281), ou qui comporte plusieurs sources lumineuses dont chacune est agencée à une position déterminée.

Une première position de la source lumineuse par rapport au réflecteur permet de produire un faisceau lumineux du type code, et une deuxième position de la source lumineuse par rapport au réflecteur permet de produire un faisceau lumineux du type feu de route.

De plus, la structure et la disposition des différentes surfaces complexes constituant le réflecteur d'un tel module optique permettent de produire directement une coupure qui délimite vers le haut le faisceau lumineux, par exemple pour que le module optique produise un faisceau lumineux qui remplit la fonction de code.

Cet exemple de réalisation est notamment mis en oeuvre dans les dispositifs comportant des modules optiques du type parabolique, également dits de réflexion à surface complexe.

En complément des fonctions principales classiques décrites ci-dessus, notamment la fonction code et la fonction feu de route, différents perfectionnements sont progressivement apparus.

On a ainsi vu se développer des fonctions élaborées, ou fonctions avancées, parmi lesquelles on trouve notamment:
- une fonction dite « Bending Light » en anglais ou BL, qui peut se décomposer en une fonction dite « Dynamic Bending Light » en anglais ou DBL et une fonction dite « Fixed Bending Light » en anglais ou FBL. La fonction DBL permet de modifier l'orientation d'un faisceau lumineux produit par une source lumineuse d'un module optique, à l'aide d'un moyen d'orientation angulaire du faisceau autour d'un axe vertical, de telle sorte que lorsque le véhicule aborde un virage, la route est éclairée de façon optimale ;
- une fonction dite « Town Light » en anglais ou TL, ou encore éclairage de ville en français, cette fonction assure l'élargissement d'un faisceau de type code, tout en diminuant légèrement sa portée ;
- une fonction dite « Motorway Light » en anglais ou ML, ou code autoroute en français, cette fonction assure une augmentation de la portée d'un feu de code ;
- une fonction dite « Adverse Weather Light » en anglais ou AWL, ou fonction mauvais temps, cette fonction assure une modification d'un faisceau lumineux de feu de croisement de telle sorte que le conducteur n'est pas ébloui par un reflet de son propre module optique lorsque la route est mouillée.

Les fonctions Bending Light, Adverse Weather Light, Town Light et Motorway Light sont regroupées sous le nom de fonctions dites « Adaptative Frontlighting System » en anglais ou AFS.

De même, lorsqu'un véhicule se déplace sur une autoroute, il est connu de concentrer le flux lumineux du feu de croisement au niveau de l'axe optique du dispositif, afin de faire porter un peu plus loin le faisceau produit.

De plus, toujours sur autoroute, il est connu d'orienter une partie du faisceau lumineux vers des points particuliers, appelés points de portique, de façon à augmenter le flux lumineux émis vers les panneaux de signalisation d'autoroute sous lesquels le véhicule passe.

Afin de proposer l'ensemble de ces fonctionnalités, on connaît des dispositifs d'éclairage consistant à utiliser, dans chaque module optique du type code, un cylindre, ou un disque, en rotation sur lui-même.

Le bord du cylindre ou du disque n'est pas parfaitement lisse, elle présente un ensemble de découpes, chacune des découpes permettant d'obtenir un faisceau lumineux correspondant à une des fonctions AFS, lorsque la découpe considérée est amenée, par rotation du cylindre, face à la source lumineuse du dispositif.

De tels dispositifs permettent d'obtenir l'ensemble des faisceaux AFS.

Cependant, outre le fait qu'un cylindre d'un tel dispositif est difficile à réaliser, son utilisation nécessite l'intervention d'un mécanisme de grande précision, donc coûteux, les cylindres et les disques en rotation devant pouvoir être arrêtés dans leur rotation et maintenus dans une position angulaire très précise.

Ces mécanismes sont difficiles à mettre en oeuvre, d'autant plus que de tels mécanismes doivent être capables de fonctionner durant toute la vie du véhicule.

De plus, le fait que ces mécanismes sont mis en oeuvre simultanément dans un module optique gauche et dans un module optique droit, augmente le coût de réalisation de ces systèmes.

De nouvelles réglementations, notamment pour les fonctions AFS, définissent désormais les faisceaux lumineux de façon globale, c'est à dire provenant de la face avant du véhicule, et non plus de façon particulière pour chaque module optique.

Ainsi, au moyen de modules optiques, on produit des faisceaux lumineux droit et gauche dissymétriques dont la superposition résulte en un faisceau lumineux global correspondant à une fonctionnalité particulière.

Le nombre de fonctionnalités remplies par le faisceau lumineux global est plus important que le nombre de fonctionnalités réalisables au moyen de chacun des modules optiques du dispositif pris isolément.

La complexité des mécanismes intervenant pour produire, au sein de chaque dispositif module optique, des faisceaux lumineux différents est ainsi grandement simplifiée.

Le document EP-1 466 782 décrit un dispositif d'éclairage qui, en répondant à ces nouvelles réglementations, comporte un module optique droit et un module optique gauche de même type, par exemple du type bifonction, qui sont disposés sur la face avant du véhicule.

Le module optique gauche comporte au moins une source lumineuse pour produire sélectivement au moins un premier faisceau lumineux gauche à coupure et un deuxième faisceau lumineux gauche à coupure.

Le module optique droit comporte au moins une source lumineuse pour produire sélectivement au moins un premier faisceau lumineux droit à coupure, et un deuxième faisceau lumineux droit à coupure.

Ainsi, le dispositif est apte à produire une pluralité de faisceaux lumineux globaux par superposition de faisceaux lumineux droit et gauche, chaque faisceau global remplissant une fonction déterminée.

Cependant, ce dispositif d'éclairage ne permet pas d'obtenir un faisceau global remplissant la fonction de feu de route.

Afin de remédier notamment à cet inconvénient, l'invention propose un dispositif d'éclairage multifonction pour véhicule automobile, qui comporte :
- un premier module optique qui comporte au moins une source lumineuse pour produire au moins un premier faisceau lumineux à coupure et un deuxième faisceau lumineux à coupure, et
- un second module optique qui comporte au moins une source lumineuse pour produire au moins un troisième faisceau lumineux sans coupure et un quatrième faisceau lumineux à coupure,
- le premier module optique et le second module optique étant agencés à l'avant du véhicule et de part et d'autre d'un axe longitudinal médian du véhicule, et en ce que le dispositif est apte à produire une pluralité de faisceaux lumineux globaux par superposition de faisceaux lumineux produit par le premier et le second module optique, chaque faisceau global remplissant ainsi une fonction déterminée.

Chacun des modules est donc apte à émettre au moins deux faisceaux différents. Ils peuvent émettre chacun seulement deux faisceaux, ou émettre chacun (ou l'un d'entre eux) plus de deux faisceaux, par exemple trois ou quatre faisceaux.

Par coupure, on entend le terme couramment utilisé dans le domaine de l'éclairage automobile, à savoir une délimitation nette vers le haut du faisceau lumineux, correspondant à un passage de la zone éclairée à l'obscurité quasiment sans transition. Les objets situés au-dessus de la coupure ne sont par conséquent pas ou pratiquement pas éclairés. La coupure délimite le faisceau en son centre et sur une partie de sa largeur ou sur la totalité de sa largeur.

Le dispositif selon l'invention est une solution économique qui permet de réaliser quatre faisceaux globaux remplissant chacun une fonction différente, dont une fonction de feu de route, au moyen de deux modules optiques du type bifonction produisant chacun deux faisceaux distincts l'un de l'autre.

Concrètement, l'un des modules est destiné à appartenir au projecteur droit (respectivement gauche) du véhicule, et l'autre module au projecteur gauche (respectivement droit) dudit véhicule

Selon d'autres caractéristiques de l'invention :
- le dispositif est apte à produire un premier faisceau lumineux global qui remplit une fonction de feu de route de feu d'autoroute ou d'éclairage ville ou de mauvais temps par la superposition du premier faisceau lumineux à coupure et du troisième faisceau lumineux sans coupure,
- le premier module optique est apte à émettre un premier faisceau à coupure plate, notamment à l'aide d'un premier moyen de coupure,
- le premier module est, une fois monté dans le véhicule, disposé du côté opposé au trafic. Concrètement, pour un module fonctionnant en trafic à droite, ce module sera donc placé sur le côté avant gauche du véhicule, et s'il fonctionne en trafic à gauche, il sera placé sur le côté avant droit du véhicule.
- le dispositif est apte à produire un deuxième faisceau lumineux global qui remplit une fonction de feu d'autoroute par la superposition du premier faisceau lumineux à coupure et du quatrième faisceau lumineux à coupure,
- le second module optique est apte à émettre , notamment à l'aide d'un second moyen de coupure, un quatrième faisceau à coupure dite étagée, qui, de préférence, est conformée/délimitée par deux portions planes reliées entre elles par une portion oblique,
- la portion oblique de la coupure étagée du quatrième faisceau lumineux forme un angle compris entre 15° et 45°, notamment entre 20 et 40° (notamment 25 à 35°, par exemple d'environ 30°) par rapport à un axe transversal,
- le dispositif est équipé d'un moyen de correction d'assiette qui comporte :
   - un premier moyen d'orientation angulaire en site du premier et du second faisceau lumineux à coupure autour d'un axe transversal, et/ou
   - un deuxième moyen d'orientation angulaire en site du troisième et du quatrième faisceau lumineux à coupure autour d'un axe transversal,
   grâce à quoi le dispositif est apte à produire un troisième faisceau lumineux global qui remplit la fonction de feu de tourisme par la superposition du premier faisceau lumineux à coupure plate et du quatrième faisceau lumineux à coupure étagée, en orientant angulairement vers le bas au moins un desdits faisceaux par rapport à la position qu'ils occupent pour produire le deuxième faisceau global,
- le premier faisceau à coupure plate est orienté angulairement vers le haut par rapport à la position qu'il occupe pour produire le premier faisceau global, grâce au premier moyen d'orientation angulaire,
- le dispositif est apte à produire un quatrième faisceau lumineux global qui remplit une fonction de code par la superposition du deuxième faisceau lumineux à coupure et du quatrième faisceau lumineux à coupure étagée,
- le premier moyen de coupure est apte à produire une deuxième coupure dite oblique dans le deuxième faisceau lumineux à coupure, cette coupure est notamment délimitée par un bord conformé d'une première portion transversale basse et d'une deuxième portion en pente vers le haut,
- la deuxième portion en pente vers le haut du bord du deuxième faisceau lumineux forme un angle d'environ quinze degrés par rapport à un axe transversal : c'est la coupure oblique à 15° connue comme la coupure de code réglementaire en Europe.
- le premier moyen de coupure comporte un cache qui est monté mobile et qui comporte :
   - une première partie active pour former la première coupure plate du premier faisceau lumineux, et
   - une deuxième partie active du cache pour former la deuxième coupure en secteur angulaire du deuxième faisceau lumineux,
- le second moyen de coupure comporte un cache qui est monté mobile et qui comporte une partie active du cache pour former la coupure étagée du quatrième faisceau lumineux,
- le dispositif comporte :
   - un troisième moyen d'orientation angulaire du premier faisceau lumineux à coupure et du deuxième faisceau lumineux à coupure autour d'un axe vertical, et/ou
   - un quatrième moyen d'orientation angulaire du troisième faisceau lumineux sans coupure et du quatrième faisceau lumineux à coupure autour d'un axe vertical,
   Lesdits troisième et quatrième moyen d'orientation angulaire appartenant à un moyen de réalisation de la fonction « code virage »,
- le dispositif comporte des moyens de changement de l'intensité/du flux de la lumière émise par le premier module optique et/ou par le second module optique,
- les moyens de changement de l'intensité/du flux de la lumière comportent au moins une première « plieuse » associée au premier cache et/ou une seconde « plieuse » associée au second cache respectivement, et qui sont aptes à réfléchir une partie de la lumière qu'elles reçoivent pour augmenter l'intensité lumineuse du faisceau lumineux associé, une « plieuse » au sens optique du terme est une surface réfléchissante apte à rediriger un ensemble de rayons lumineux qui la frappent. Un exemple de plieuse est décrit dans le brevet EP-1 746 340, auquel on se rapportera pour plus de détails.
- les moyens de changement de l'intensité de la lumière comportent des moyens de régulation de l'alimentation électrique d'au moins une des sources lumineuses des modules. (De préférence indépendamment les unes des autres).

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en triptyque, dont une partie gauche représente la projection d'un premier faisceau gauche à coupure projeté sur une surface verticale plane par le module optique gauche, une deuxième partie droite représente la projection d'un premier faisceau droit à coupure et une partie centrale représente la projection d'un premier faisceau global formé par la superposition du premier faisceau gauche et du premier faisceau droit;
- la figure 2 est une vue similaire à celle de la figure 1, dont une partie gauche représente la projection du premier faisceau gauche à coupure projeté par le module optique gauche, une deuxième partie droite représente la projection d'un deuxième faisceau droit à coupure et une partie centrale représente la projection d'un deuxième faisceau global formé par la superposition du premier faisceau gauche et du deuxième faisceau droit ;
- la figure 3 est une vue similaire à celle de la figure 1, dont une partie gauche représente la projection du premier faisceau gauche à coupure projeté par le module optique gauche, une deuxième partie droite représente la projection du deuxième faisceau droit à coupure, le premier faisceau gauche et le deuxième faisceau droit étant abaissés par rapport à ceux de la figure 2, et une partie centrale représente la projection d'un troisième faisceau global formé par la superposition du premier faisceau gauche et du deuxième faisceau droit ;
- la figure 4 est une vue similaire à celle de la figure 1, dont une partie gauche représente la projection d'un deuxième faisceau gauche à coupure projeté par le module optique gauche, une deuxième partie droite représente la projection du deuxième faisceau droit à coupure et une partie centrale représente la projection d'un quatrième faisceau global formé par la superposition du deuxième faisceau gauche et du deuxième faisceau droit;
- la figure 5 est une vue schématique de face qui illustre une source lumineuse du module optique gauche agencée derrière un cache d'un premier moyen de coupure ;
- la figure 6 est une vue schématique en coupe longitudinale qui illustre le module optique gauche de la figure 5 dont le cache occupe une première position de coupure ;
- la figure 7 est une vue similaire à celle de la figure 6 qui illustre le module optique gauche de la figure 5 dont le cache occupe une deuxième position de coupure ;
- la figure 8 est une vue similaire à celle de la figure 6 qui illustre le module optique droit dont le cache occupe une position de coupure ;
- la figure 9 est une vue similaire à celle de la figure 6 qui illustre le module optique droit dont le cache occupe une position inactive.

Dans la description qui va suivre, pour faciliter sa compréhension ainsi que celle des revendications, on adoptera à titre non limitatif et sans référence à la gravité terrestre, la terminologie avant, arrière et verticale, transversale, longitudinale selon le trièdre L, V, T représenté aux figures.

De même, des numéros de référence identiques désignent des pièces identiques ou ayant des fonctions similaires.

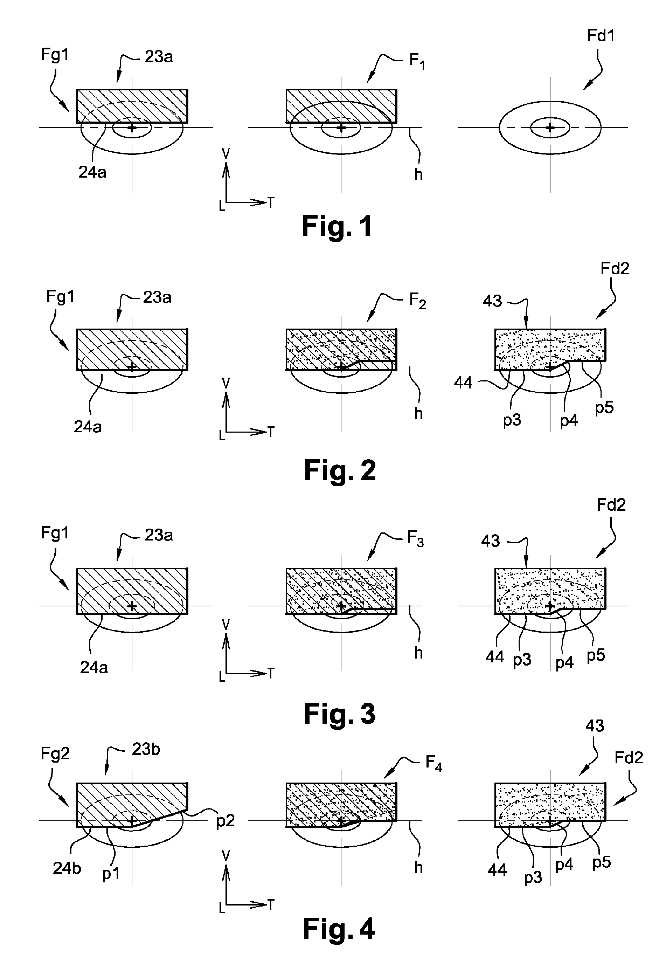

On a représenté aux figures 1 à 4, des projections de faisceaux lumineux sur une surface plane verticale transversale, qui sont produites par un dispositif d'éclairage multifonction pour véhicule automobile (non représenté) selon l'invention.

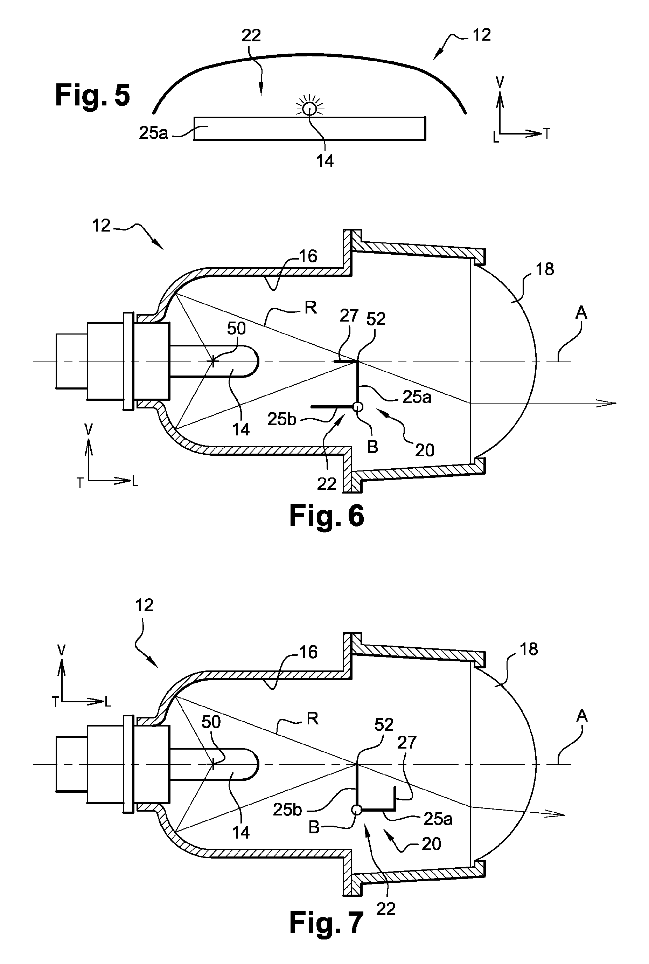

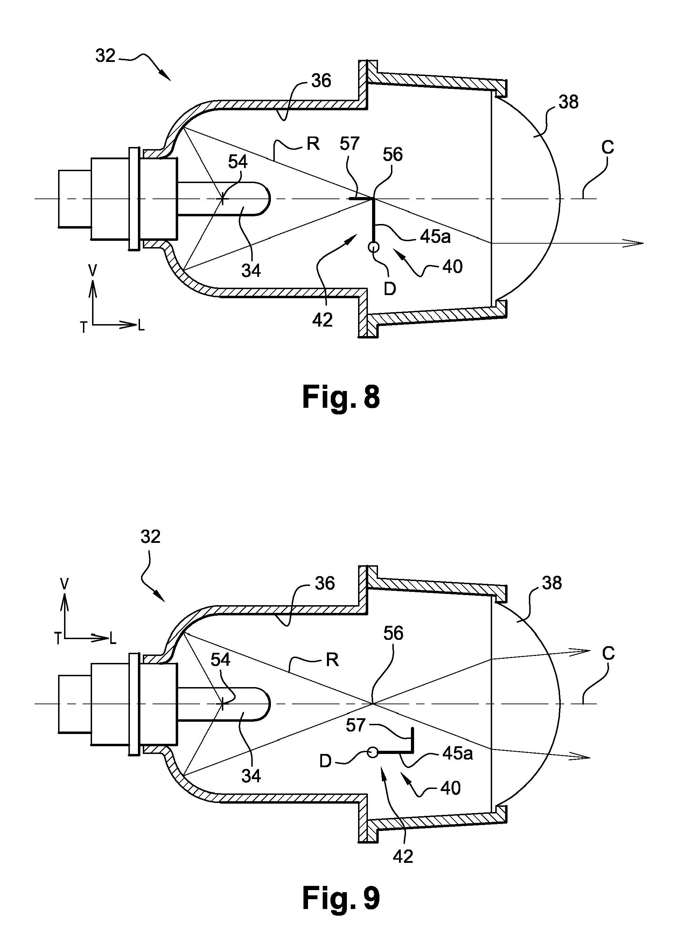

Le dispositif comporte un premier module optique gauche 12 représenté aux figures 5 à 7, et un second module optique droit 32 représenté aux figures 8 et 9, qui sont agencés de part et d'autre d'un axe longitudinal médian du véhicule.

Le module optique gauche 12 est agencé dans une partie avant gauche du véhicule, et le module optique droit 32 est agencé à un côté opposé, dans une partie avant droite.

Le module optique gauche 12 est ici du type elliptique, c'est à dire qu'il comporte une source lumineuse 14 qui est agencée dans un premier foyer 50, un réflecteur ellipsoïdal 16 capable de concentrer des rayons lumineux R issus du premier foyer 50 vers un second foyer 52 de concentration situé en avant de la source lumineuse 14, et une lentille 18 placée en avant du second foyer 52 et centrée sur l'axe optique A du module optique 12, permettant de réorienter les rayons R lumineux vers l'axe optique A, afin de produire un faisceau lumineux d'éclairage.

L'axe optique est formé par une droite longitudinale qui passe globalement par les deux foyers 50 et 52.

On entend par source lumineuse 14 tout élément apte à émettre de la lumière, comme par exemple une ou plusieurs diodes électroluminescentes, dite LED, ou encore une lampe du type halogène ou du type xénon.

Le module optique gauche 12 est du type bifonction, c'est à dire qu'il est apte à produire deux faisceaux lumineux distincts.

A cet effet, le module optique gauche 12 comporte un premier moyen de coupure 20 pour produire sélectivement un premier faisceau lumineux gauche Fg1 à coupure plate et un deuxième faisceau lumineux gauche Fg2 à coupure en secteur angulaire, représentés schématiquement à gauche aux figures 1 et 4.

Comme représenté aux figures 5 à 7, le premier moyen de coupure 20 comporte un cache 22 qui est monté pivotant autour d'un axe B transversal, entre une première position de coupure et une deuxième position de coupure.

Dans la première position de coupure du cache 22, une première partie active 25a du cache 22 occulte en partie la lumière émise par la source lumineuse 14 du module optique gauche 12 pour former le premier faisceau lumineux gauche Fg1 à coupure plate.

La première partie active 25a du cache 22 produit une première coupure plate 23a qui délimite vers le haut le premier faisceau lumineux gauche Fg1 à coupure plate par un bord 24a transversal plat, comme on peut le voir à gauche à la figure 1.

Dans la seconde position de coupure du cache 22, une deuxième partie active 25b du cache 22 occulte en partie la lumière émise par la source lumineuse 14 du module optique gauche 12 pour former le deuxième faisceau lumineux gauche Fg2 à coupure.

La deuxième partie active 25b du cache 22 produit une deuxième coupure 23b en secteur angulaire qui délimite vers le haut le deuxième faisceau lumineux gauche Fg2 à coupure par un bord 24b.

Le bord 24b est conformé consécutivement de gauche à droite par une première portion transversale p1 basse et une deuxième portion p2 en pente vers le haut selon un angle de quinze degrés environ par rapport à un axe transversal, comme on peut le voir à la figure 4.

La première partie active 25a et la deuxième partie active 25b sont deux ailes montées sur un arbre transversal de façon décalée angulairement selon un axe transversal.

Le module optique droit 32, représenté aux figures 8 et 9, est du type elliptique et il est globalement similaire au module optique gauche 12.

Le module optique droit 32 comporte une source lumineuse 34 qui est agencée dans un premier foyer 54, un réflecteur ellipsoïdal 36 capable de concentrer des rayons lumineux R issus du premier foyer 54 vers un second foyer 56 de concentration situé en avant de la source lumineuse 34, et une lentille 38 placée en avant du second foyer 56 et centrée sur l'axe optique C du module optique droit 32, permettant de réorienter les rayons R lumineux vers l'axe optique C, afin de produire un faisceau lumineux d'éclairage.

L'axe optique est formé par une droite longitudinale qui passe globalement par les deux foyers 54 et 56.

De même que le module optique gauche 12, le module optique droit 32 est du type bifonction, il comporte un second moyen de coupure 40 pour produire sélectivement un premier faisceau lumineux droit Fd1 sans coupure, ou plein, et un deuxième faisceau lumineux droit Fd2 à coupure étagée, représentés schématiquement aux figures 1 et 2.

A cet effet, le second moyen de coupure 40 comporte un cache 42 qui est monté pivotant autour d'un axe D transversal, entre une première position inactive dans laquelle le module optique droit 32 produit le premier faisceau lumineux droit Fd1 1 sans coupure et une deuxième position de coupure dans laquelle le module optique droit 32 produit le deuxième faisceau lumineux droit Fd2 à coupure étagée.

Dans sa deuxième position de coupure représentée à la figure 8, une partie active 45a du cache 42 du second moyen de coupure 40 occulte en partie la lumière émise par la source lumineuse 34 du module optique droit 32 pour former le deuxième faisceau lumineux droit Fd2 à coupure.

La partie active 45a du cache 42 produit une coupure étagée 43 qui délimite vers le haut le deuxième faisceau lumineux droit Fd2 à coupure par un bord 44 conformé consécutivement de gauche à droite par une première portion transversale p3 basse, une deuxième portion p4 intermédiaire en pente vers le haut selon un angle compris entre vingt cinq et trente cinq degrés par rapport à un axe transversal et une troisième portion p5 transversale haute, comme on peut le voir à la figure 4.

De plus, le dispositif comporte un premier moyen d'orientation angulaire (non représenté) en site du premier faisceau lumineux gauche Fg1 à coupure plate et du deuxième faisceau lumineux gauche Fg2 à coupure en secteur angulaire, autour d'un axe transversal.

De même, le dispositif comporte un deuxième moyen d'orientation angulaire (non représenté) en site du premier faisceau lumineux droit Fd1 sans coupure et du deuxième faisceau lumineux droit Fd2 à coupure, autour d'un axe transversal.

Lesdits premier et deuxième moyens d'orientation angulaire en site sont par exemple utilisés pour la correction dynamique de l'assiette du véhicule, ils permettent d'orienter angulairement les deux faisceaux gauche Fg1, Fg2 et les deux faisceaux droit Fd1, Fd2 vers le haut ou vers le bas par pivotement autour d'un axe transversal, de façon simultanée ou indépendante.

Les moyens d'orientation angulaire en site sont ici susceptibles d'être actionnés indépendamment l'un de l'autre.

Aussi, le dispositif comporte un troisième moyen d'orientation angulaire (non représenté) du premier faisceau lumineux gauche Fg1 à coupure et du deuxième faisceau lumineux gauche Fg2 à coupure, autour d'un axe vertical.

De même, le dispositif comporte un quatrième moyen d'orientation angulaire (non représenté) du premier faisceau lumineux droit Fd1 sans coupure et du deuxième faisceau lumineux droit Fd2 à coupure, autour d'un axe vertical.

Lesdits troisième et quatrième moyens d'orientation angulaire autour d'un axe vertical sont par exemple utilisés pour réaliser la fonction Dynamic Bending Light (DBL), ils permettent d'orienter angulairement et simultanément chacun des deux faisceaux gauche Fg1, Fg2 et chacun des deux faisceaux droits Fd1, Fd2 vers la gauche ou vers la droite par pivotement autour d'un axe vertical.

Enfin, le dispositif comporte des moyens de changement de l'intensité lumineuse de la lumière émise par le module optique gauche 12 et par le module optique droit 32.

Les moyens de changement de l'intensité lumineuse comportent ici une première plieuse 27 qui est associée au premier cache 22 du module optique gauche 12, et qui est apte à réfléchir une partie de la lumière qu'elle reçoit pour augmenter l'intensité lumineuse du faisceau lumineux associé.

A cet effet, la plieuse 27 présente une surface réfléchissante qui est apte à rediriger au dessus de la partie active associée du cache 22, ici la première partie active 25a, des rayons lumineux émis par la source 14 en direction dudit cache 22.

La première plieuse 27 s'étend globalement longitudinalement depuis l'extrémité libre de la première partie active 25a du cache 22 lorsque ladite première active 25a occulte en partie la lumière émise par la source lumineuse 14 du module optique gauche 12.

De même, les moyens de changement de l'intensité lumineuse comportent une seconde plieuse 47 qui est associée au second cache 42 du module optique droit 32, et qui est apte à réfléchir une partie de la lumière qu'elle reçoit pour augmenter l'intensité lumineuse du faisceau lumineux associé.

De plus, les moyens de changement de l'intensité lumineuse comportent des moyens de régulation de la tension électrique qui permettent de commander et de faire varier indépendamment l'intensité lumineuse de chacun des faisceaux gauche Fg1, Fg2 et droit Fd1, Fd2, ici dans un état d'intensité lumineuse dite "faible", ou dans un état d'intensité lumineuse dite "forte".

Les figures 1 à 4 sont organisées de façon similaire les unes par rapport aux autres, elles comportent chacune une partie gauche représentant la projection d'un faisceau lumineux gauche produit par le module optique gauche 12, une partie droite représentant la projection d'un faisceau lumineux droit produit par le module optique droit 32, et une partie centrale représentant la superposition des deux faisceaux gauche et droit formant un faisceau global.

Lesdites projections sont chacune réalisées sur une surface plane qui est agencée face au dispositif et qui est perpendiculaire à l'axe optique du module optique considéré.

Les zones qui sont hachurées ou qui comportent un nuage de points, aux figures 1 à 4, sont des zones rendues non lumineuses par les moyens de coupure du dispositif.

Donc dans chaque partie centrale représentant un faisceau global, on considère qu'une zone qui comporte à la fois des hachures et un nuage de points n'est pas du tout éclairée par les modules optiques gauche et droit, tandis qu'une zone qui comporte exclusivement des hachures soit exclusivement un nuage de points n'est éclairée que par un seul module optique gauche ou droit. Une zone dépourvue de hachure et de nuage de points est éclairée simultanément par les deux modules optiques gauche et droit, et présente donc une intensité lumineuse supérieure à une zone hachurée ou comportant un nuage de point.

Chacune des parties centrales des figures 1 à 4 comportent un axe horizontal h de référence, qui représente la ligne d'horizon dans le plan de projection du module optique.

Selon une première configuration représentée à la figure 1, le dispositif produit un premier faisceau global F1 par l'émission simultanée du premier faisceau lumineux gauche Fg1 à coupure plate et du premier faisceau lumineux droit Fd1 sans coupure.

On entend par faisceau global un faisceau qui est produit par la combinaison et la superposition de faisceaux lumineux gauche et droit, chaque faisceau global remplissant une fonction déterminée.

L'intensité lumineuse du premier faisceau lumineux gauche Fg1 à coupure est commandée, par les moyens de changement d'intensité lumineuse, dans un état d'intensité dite "forte" et l'intensité lumineuse du premier faisceau lumineux droit Fd1 à coupure est commandée dans un état d'intensité dite "forte", de sorte que le premier faisceau global F1 remplit la fonction de feu de route, conformément aux normes visées.

De plus, le bord 24a transversal plat du premier faisceau lumineux gauche Fg1 s'étend sensiblement au dessus de l'axe de référence horizontal h.

Selon une deuxième configuration représentée à la figure 2, le dispositif produit un deuxième faisceau global F2 par l'émission simultanée du premier faisceau lumineux gauche Fg1 à coupure plate et du deuxième faisceau lumineux droit Fd2 à coupure étagée.

L'intensité lumineuse du premier faisceau lumineux gauche Fg1 à coupure est commandée dans un état d'intensité dite "forte" et l'intensité lumineuse du deuxième faisceau lumineux droit Fd2 à coupure est commandée dans un état d'intensité dite "faible", de sorte que le deuxième faisceau global F2 remplit la fonction de feu d'autoroute.

Le bord 24a transversal du premier faisceau lumineux gauche Fg1 est ici superposé avec la première portion transversale p3 basse du bord 44 du deuxième faisceau lumineux droit Fd2 à coupure.

De plus, le bord 24a transversal plat du premier faisceau lumineux gauche Fg1 s'étend sensiblement au dessous de l'axe de référence horizontal h, la première portion transversale p3 basse du bord 44 du deuxième faisceau lumineux droit Fd2 s'étend sensiblement au dessous de l'axe de référence horizontal h et la troisième portion transversale p5 haute du bord 44 du deuxième faisceau lumineux droit Fd2 s'étend sensiblement au dessus de l'axe de référence horizontal h.

Selon une troisième configuration représentée à la figure 3, le dispositif produit un troisième faisceau global F3, de la même manière que le deuxième faisceau global F2, par l'émission simultanée du premier faisceau lumineux gauche Fg1 à coupure plate et du deuxième faisceau lumineux droit Fd2 à coupure étagée.

Toutefois, le premier faisceau lumineux gauche Fg1 à coupure et le deuxième faisceau lumineux droit Fd2 à coupure sont ici orientés angulairement vers le bas autour d'un axe transversal, par rapport à la position angulaire que chacun desdits faisceaux occupent pour produire le deuxième faisceau global F2, au moyen du premier et du second moyens d'orientation angulaire autour d'un axe transversal.

L'intensité lumineuse du premier faisceau lumineux gauche Fg1 à coupure est commandée dans un état d'intensité dite "forte" et l'intensité lumineuse du deuxième faisceau lumineux droit Fd2 à coupure est commandée dans un état d'intensité dite "faible", de sorte que le troisième faisceau global F3 remplit la fonction de feu de tourisme.

Le bord 24a transversal du premier faisceau lumineux gauche Fg1 est ici superposé avec la première portion transversale p3 basse du bord 44 du deuxième faisceau lumineux droit Fd2 à coupure.

De plus, le bord 24a transversal plat du premier faisceau lumineux gauche Fg1 s'étend sensiblement au dessous de l'axe de référence horizontal h, la première portion transversale p3 basse du bord 44 du deuxième faisceau lumineux droit Fd2 s'étend sensiblement au dessous de l'axe de référence horizontal h et la troisième portion transversale p5 haute du bord 44 du deuxième faisceau lumineux droit Fd2 s'étend sensiblement au dessous de l'axe de référence horizontal h.

Ainsi, le troisième faisceau global F3 permet de ne pas éblouir un conducteur qui est en face du véhicule et permet aussi de bien éclairer la route.

Selon une quatrième configuration représentée à la figure 4, le dispositif produit un quatrième faisceau global F4 par l'émission simultanée du deuxième faisceau lumineux gauche Fg2 à coupure en secteur angulaire et du deuxième faisceau lumineux droit Fd2 à coupure étagée.

L'intensité lumineuse du deuxième faisceau lumineux gauche Fg2 à coupure est commandée dans un état d'intensité dite "faible" et l'intensité lumineuse du deuxième faisceau lumineux droit Fd2 à coupure est commandée dans un état d'intensité lumineuse dite "faible", de sorte que le quatrième faisceau global F4 remplit la fonction de code.

La première portion transversale p1 basse du bord 24b du deuxième faisceau lumineux gauche Fg2 est ici superposé avec la première portion transversale p3 basse du deuxième faisceau lumineux droit Fd2 à coupure.

De plus, la première portion transversale p1 basse du bord 24b transversal du deuxième faisceau lumineux gauche Fg2 s'étend sensiblement au dessous de l'axe de référence horizontal h, la première portion transversale p3 basse du bord 44 du deuxième faisceau lumineux droit Fd2 s'étend sensiblement au dessous de l'axe de référence horizontal h et la troisième portion transversale p5 haute du bord 44 du deuxième faisceau lumineux droit Fd2 s'étend sensiblement au dessous de l'axe de référence horizontal h.

Selon un autre aspect de l'invention non représenté, les faisceaux lumineux gauche Fg1, Fg2 et droit Fd1, Fd2, sont orientés angulairement sensiblement à gauche ou à droite par les troisième et quatrième moyens d'orientation angulaire autour d'un axe vertical respectivement, afin d'optimiser la fonction remplie par le faisceau global produit.

Ainsi, le dispositif d'éclairage selon l'invention permet, avec deux modules optiques bifonction, de produire quatre faisceaux globaux distincts qui remplissent chacun une fonction, dont la fonction de code.

A titre non limitatif, le dispositif est apte à produire d'autres faisceaux globaux qui remplissent les fonctions Adverse Weather Light, Town Light, notamment par l'orientation angulaire des faisceaux droit Fd1, Fd2 et/ou gauche Fg1, Fg2 grâce aux moyens d'orientation angulaire décrit précédemment.

La description a été faite en référence à un véhicule conçu pour rouler dans des pays dans lesquels la législation impose de rouler à droite de la route. On comprendra que l'invention est applicable à des véhicules conçus pour rouler à gauche. Dans ce cas les termes gauche et droit sont inversés.

## Revendications

1. Dispositif d'éclairage multifonction pour véhicule automobile, **caractérisé en ce que** le dispositif comporte :
- un premier module optique (12) qui comporte au moins une source lumineuse (14) pour produire au moins un premier faisceau lumineux (Fg1) à coupure et un deuxième faisceau lumineux (Fg2) à coupure différente, et
- un second module optique (32) qui comporte au moins une source lumineuse (34) pour produire au moins un troisième faisceau lumineux (Fd1) sans coupure et un quatrième faisceau lumineux (Fd2) à coupure,
- le premier module optique (12) et le second module optique (32) étant agencés à l'avant du véhicule et de part et d'autre d'un axe longitudinal médian du véhicule,
et **en ce que** le dispositif est apte à produire une pluralité de faisceaux lumineux globaux différents (F1, F2, F3, F4) par superposition de faisceaux lumineux produit par le premier et le second module optique (12, 32).

2. Dispositif selon la revendication 1, **caractérisé en ce qu'**il est apte à produire un premier faisceau lumineux global (F1) qui remplit une fonction de feu de route par la superposition du premier faisceau lumineux (Fg1) à coupure et du troisième faisceau lumineux (Fd1) sans coupure.

3. Dispositif selon l'une des revendications précédentes, **caractérisé en ce que** le premier faisceau lumineux (Fg1) est à coupure plate.

4. Dispositif selon l'une des revendications précédentes, **caractérisé en ce que** le premier module (12) est, une fois monté dans le véhicule, disposé du côté opposé au trafic.

5. Dispositif selon l'une des revendications précédentes, **caractérisé en ce qu'**il est apte à produire un deuxième faisceau lumineux global (F2) qui remplit une fonction de feu d'autoroute ou d'éclairage ville ou de mauvais temps par la superposition du premier faisceau lumineux (Fg1) à coupure et du quatrième faisceau lumineux (Fd2) à coupure.

6. Dispositif selon la revendication précédente, **caractérisé en ce que** le second module optique (32) produit le quatrième faisceau (Fd2) avec une coupure étagée (43), qui est de préférence délimitée par au moins deux portions planes (p3, p5) reliées entre elles par une portion oblique (p4).

7. Dispositif selon la revendication précédente, **caractérisé en ce que** la portion oblique (p4) de la coupure étagée (43) du quatrième faisceau lumineux (Fd2) forme un angle compris entre 15° et 45°, notamment entre 20 et 40°, par rapport à un axe transversal.

8. Dispositif selon l'une des revendications précédentes, **caractérisé en ce qu'**il est équipé d'un moyen de correction d'assiette qui comporte :
- un premier moyen d'orientation angulaire en site du premier et du second faisceau lumineux (Fg1, Fg2) à coupure autour d'un axe transversal, et/ou
- un deuxième moyen d'orientation angulaire en site du troisième et du quatrième faisceau lumineux (Fd1, Fd2) à coupure autour d'un axe transversal,
grâce à quoi le dispositif est apte à produire un troisième faisceau lumineux global (F3) qui remplit la fonction de feu de tourisme par la superposition du premier faisceau lumineux (Fg1) à coupure plate et du quatrième faisceau lumineux (Fd2) à coupure étagée, en orientant angulairement vers le bas au moins un desdits faisceaux (Fg1, Fd2) par rapport à la position qu'ils occupent pour produire le deuxième faisceau global (F2).

9. Dispositif selon la revendication précédente, **caractérisé en ce que** le premier faisceau (Fg1) à coupure plate est orienté angulairement vers le haut par rapport à la position qu'il occupe pour produire le premier faisceau global (F1), grâce au premier moyen d'orientation angulaire.

10. Dispositif selon l'une des revendications précédentes, **caractérisé en ce qu'**il est apte à produire un quatrième faisceau lumineux global (F4) qui remplit une fonction de code par la superposition du deuxième faisceau lumineux (Fg2) à coupure et du quatrième faisceau lumineux (Fd2) à coupure étagée.

11. Dispositif selon l'une des revendications précédentes, **caractérisé en ce que** le deuxième faisceau lumineux (Fg2) est à coupure oblique, notamment à environ 15°.

12. Dispositif selon l'une des revendications précédentes, **caractérisé en ce que** le premier module optique (12) comprend un premier moyen de coupure (20) qui comporte un cache (22) mobile et qui comporte :
- une première partie active (25a) pour former la première coupure plate (23a) du premier faisceau lumineux (Fg1), et
- une deuxième partie active (25b) du cache (22) pour former la deuxième coupure (23b) en secteur angulaire du deuxième faisceau lumineux (Fg2).

13. Dispositif selon l'une des revendications précédentes, **caractérisé en ce que** le second module optique comprend un second moyen de coupure (40) qui comporte un cache (42) monté mobile et qui comporte une partie active (45a) du cache (42) pour former la coupure étagée (43) du quatrième faisceau lumineux (Fd2).

14. Dispositif selon l'une des revendications précédente, **caractérisé en ce que** le dispositif comporte :
- un troisième moyen d'orientation angulaire du premier faisceau lumineux (Fg1) à coupure et du deuxième faisceau lumineux (Fg2) à coupure autour d'un axe vertical, et/ou
- un quatrième moyen d'orientation angulaire du troisième faisceau lumineux (Fd1) sans coupure et du quatrième faisceau lumineux (Fd2) à coupure autour d'un axe vertical,
Lesdits troisième et quatrième moyen d'orientation angulaire appartenant à un moyen de réalisation de la fonction « code virage».

15. Dispositif selon l'une des revendications précédentes, **caractérisé en ce qu'**il comporte des moyens de changement de l'intensité de la lumière émise par le premier module optique (12) et/ou par le second module optique (32).

16. Dispositif selon les revendications 12, 13 et 15, **caractérisé en ce que** les moyens de changement de l'intensité de la lumière comportent au moins une première plieuse (27) associée au premier cache (22) et/ou et une seconde plieuse (47) associée au second cache (42).

17. Dispositif selon la revendication 15 ou 16, **caractérisé en ce que** les moyens de changement de l'intensité de la lumière comportent des moyens de régulation de l'alimentation électrique d'au moins une des sources lumineuses (14,34).
